# EUROPÄISCHE PATENTSCHRIFT

(11) **EP 2 049 815 B1**
(45) Veröffentlichungstag und Bekanntmachung des Hinweises auf die Patenterteilung: **29.08.2012**
(21) Anmeldenummer: 07729504.6
(22) Anmeldetag: 25.05.2007
(51) Int. Cl.: F16F 9/04

(54) **LUFTFEDER FÜR FAHRZEUGE**
AIR SPRING FOR VEHICLES
RESSORT À AIR POUR VEHICULES

(30) Priorität: 03.08.2006 DE 102006036248
(43) Veröffentlichungstag der Anmeldung: 22.04.2009
(73) Patentinhaber: Continental Teves AG & Co. OHG, 60488 Frankfurt (DE)
(72) Erfinder: JEISCHIK, Joachim, 30974 Wennigsen (DE)
(86) Internationale Anmeldenummer: PCT/EP2007/055075
(87) Internationale Veröffentlichungsnummer: WO 2008/015034

(56) Entgegenhaltungen:
- WO-A-01/26921
- WO-A-2004/067989
- DE-A1-102004 050 189
- DE-B- 1 217 600
- US-A- 3 186 885

## Beschreibung

Die Erfindung betrifft eine Luftfeder oder einen Luftdämpfer für Fahrwerke von Fahrzeugen gemäß dem Oberbegriff des Patentanspruchs 1.

Rollbälge von Luftfedern sind nicht nur durch Klemmkräfte an den Einspannstellen hoch belastet, sondern auch in den Bereichen, in denen die Rollbälge senkrecht zu ihrer Achse wirkende Kräfte aufnehmen müssen, also etwa Radführungshäfte. Solche Kräfte bewirken eine leichte Auslenkung des Balges senkrecht zu seiner Achse und belasten damit gerade die "freien" die Querschnitte des Rollbalges außerhalb der Einspannbereiche. Bei dünnen Rollbälgen kann dies problematisch werden.

Dünne Rollbälge sind aber zur Steigerung eines komfortable Federungsverhaltens und zur Reduktion des so genannten Harshness-Verhaltens oft gewünscht. Der Fachmann versteht unter dem Begriff "Harshness" ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Materialien, Eigendämpfungen, Trägheiten etc. entsteht.

Im Hinblick auf die für dünne Rollbälge kritischen Klemmkräfte offenbart die WO 2004/067989 A1 eine Luftfeder mit einem Rollbalg, bei welchem beide Endbereiche mit kurzen Lagenumschlägen versehen bzw. zurückgestülpt oder "umgebuckt" sind. Dieses Zurückstülpen erfolgt jedoch erst nach der Vulkanisation des Rollbalges. Bei einem möglichst dünnen und damit komfortabel federnden Rollbalg liegt der Grund für diesen Umschlag darin, dass der Rollbalg im Einspannbereich an die Anschlussteile, also im Einspannbereich des Deckels oder des Abrollkolbens, verdickt, d.h. verdoppelt werden soll. Dies wiederum ist bei einem dünnen Balg erforderlich, um bei hohen Klemmkräften keine Materialschäden durch Quetschungen durch die Spannringe zu riskieren. Bei dieser Luftfeder wird der Lagenumschlag erst nach der Vulkanisation des Balges und nur im Einspannbereich an letzterem angebracht. Eine Verstärkung der restlichen Rollbalglänge findet nicht statt.

Um auch bei dünnen Wandstärken die erforderlichen Festigkeiten zu erreichen, werden Rollbälge üblicherweise als gewebeverstärkte Gummibälge hergestellt, wobei in der Gummimatrix des Rollbalges mehrere Gewebe- oder Cordlagen übereinander angeordnet sein können, deren Fäden in unterschiedlichen Winkeln den Rollbalg umlaufen. Oft verwendet man Lagen mit sich kreuzenden Fäden (bezogen auf den fertigen Rollbalg).

Eine weitere Möglichkeit, ein komfortables Federungsverhalten und geringere "Harshness" mit dünneren Rollbälge zu erreichen, besteht darin, die Rollbälge bzw. die Luftfedern oder -dämpfer mit so genannten Außenführungen zu versehen, nämlich mit einem den Rollbalg umgebenden rohrförmigen "Stützkorsett" oder Stützkörper. So lässt sich beispielsweise ein dünner Rollbalg mit einem dünnen Leichtmetallrohr als Stützkörper umgeben.

Die Außenführungen können dabei mit dem Luftfederdeckel direkt verbunden sein, so dass der Rollbalg einerseits an der Außenseite des Abrollkolbens und andererseits an der Innenoberfläche der Außenführung abrollen kann. Die für die Rollfalte verbleibende Differenz zwischen Innendurchmesser der Außenführung und Außendurchmesser des Abrollkolbens ist dabei relativ gering. Damit entsteht das Problem, dass senkrecht zur Achse des Rollbalges wirkende Kräfte kaum aufgenommen werden können, da auch nur geringste Auslenkungen des Balges im Zwischenraum (Innendurchmesser der Außenführung - Außendurchmesser des Abrollkolbens) bereits den Rollbalg auf Dauer schädigen können.

Eine Lösung für dieses technische Problem besteht darin, dass die Außenführung nicht am Luftfederdeckel befestigt ist, sondern mit etwas Abstand zu letzterem am Rollbalg als solchen. Dies geschieht beispielsweise durch einen Klemmring auf der Innenseite des Rollbalges, der die den Rollbalg umgebende Außenführung an ihrem oberen Ende fest auf den Rollbalg klemmt. Der senkrechte Abstand zwischen Luftfederdeckel und Außenführung, d.h. das nicht von der Außenführung umgebende deckelnahe Teilstück des Rollbalges kann nun als "Gelenk" genutzt werden, dass die Schwenkbarkeit des Luftfederbalges trotz Außenführung ermöglicht und damit wieder die durch senkrecht zur Achse des Rollbalges wirkende Kräfte erzeugten Auslenkungen zulässt. Im Fachbereich ist dieses Teilstück des Rollbalges als "Kardanikfalte" oder "Kardanikgelenk" bekannt.

Aus der WO 01/26921 A ist eine Luftfeder mit einer Außenführung und mit einer derartigen Kardanikfalte bekannt. Bei der vorbekannten Luftfederanordnung ist im näheren Bereich der Anbindung des Luftfederbalges am Luftfederdeckel ein gelenkiges Bauteil angebracht, das unter Druck Schwenkbewegungen zulässt. Dabei wird eine zweite Luftfederschlaufe, die sich in radialer Richtung erstreckt, gebildet.

Natürlich ist diese Kardanikfalte stark belastet, so dass zur partiellen Verstärkung des Rollbalges bereits bei seiner Herstellung zusätzliche Materiallagen, nämlich Gewebe-und/oder Gummilagen im Bereich der später nach und durch den Zusammenbau der Luftfeder entstehenden Kardanikfalte vorgesehen werden. Das Auflegen zusätzlicher Gewebe- und/oder Gummilagen ist jedoch nur bei einer Einzelfertigung von Rollbälgen möglich und auch dort mit erheblichem zusätzlichem Fertigungsaufwand verbunden. Bei einer kontinuierlichen Fertigung von Rollbälgen "am Strang" besteht bisher nur die Möglichkeit, entweder auf eine Verstärkung der Kardanikfalte zu verzichten, oder aber den gesamten Rollbalgstrang zu verstärken. Letzteres ist, wie oben bereits geschildert, aus Gründen des Komforts und der "Harshness" ungewünscht.

Für die Erfindung bestand daher die Aufgabe, eine Luftfeder oder einen Luftdämpfer mit einem möglichst dünnen Rollbalg bereitzustellen, der in einem kontinuierlichen Herstellungsprozess zu fertigen ist und trotzdem in einzelnen Bereichen Verstärkungen oder Wandverdickungen aufweist.

Gelöst wird diese Aufgabe durch die Merkmale des Hauptanspruchs. Weitere vorteilhafte Ausbildungen sind in den Unteransprüchen offenbart. Ebenfalls ist ein Verfahren zur Herstellung offenbart.

Dabei weist der Rollbalg an dem verstärkten oberen Ende mindestens einen durchgehend vulkanisierten Lagenumschlag auf, der in einer solchen Länge zurückgestülpt ist, dass nach

Zusammenbau der Luftfeder mindestens eine Kardanikfalte des Rollbalges, welche eine durch senkrecht zur Achse des Rollbalges wirkende Kräfte erzeugte Auslenkung des Rollbalges ermöglicht, in den Bereich des Lagenumschlages fällt. Der Lagenumschlag erfolgt also in der Herstellung des Rollbalges vor der Vulkanisation, wodurch eine durchgehend vulkanisierte Luftfederwand mit einer über die Wandstärke des Balges in der Gummimatrix fixierten Festigkeitsträgerstruktur entsteht. Ein solcher hochfester Lagenumschlag lässt sich sowohl bei Rollbälgen aus einer Einzelfertigung als auch bei Rollbälgen aus einer kontinuierlichen Fertigung realisieren und wird sehr genau nur bis in die in aller Regel einem Ende des Rollbalges nahe liegenden Bereiche zurückgeschlagen / zurückgestillpt, die einer besonders hohen Belastung unterliegen. Dadurch erreicht man auf der einen Seite ein komfortables Federungsverhalten und geringere "Harshness" mit dünnen Rollbälgen und auf der anderen Seite genügend Festigkeit in hoch belasteten Bereichen durch einen gezielten und vulkanisierten Lagenumschlag. Denkbar ist es auch, dass bei besonders dünnen Rollbälgen zwei übereinander angeordnete Lagenumschläge - und damit in der Herstellung aufeinander folgende Lagenumschläge - ausgebildet sind. In jedem Fall wird der Rollbalg bei der Herstellung nach dem oder den Lagenumschlägen in der Wärme ausvulkanisiert.

Gemäß der Erfindung weist die Luftfeder eine am Rollbalg befestigte und zu dem Luftfederdeckel beabstandete Außenführung auf, der Lagenumschlag an dem der Befestigung der Außenführung nahe liegenden Ende des Rollbalges angeordnet und in einer solchen Länge zurückgestülpt ist, dass nach Zusammenbau der Luftfeder die Kardanikfalte des Rollbalges zwischen Luftfederdeckel und Außenführung in den Bereich des Lagenumschlages fällt. Damit lässt sich die Wanddicke des Rollbalgs im vorgeschilderten Sinne weiter verbessern und lediglich der Bereich der so genannten "Kardanikfalte" zwischen einem Anschlussteil und der Außenführung gezielt verstärken.

Eine weitere vorteilhafte Weiterbildung besteht darin, dass der Lagenumschlag bis in den Befestigungsbereich der Außenführung reicht. Damit kann die durch den Lagenumschlag erzeugte Verstärkung zusätzlich für die Verstärkung des geklemmten Bereiches des Rollbalges zwischen Außenführung und Innenklemmring genutzt werden.

Eine weitere vorteilhafte Weiterbildung besteht darin, dass der Lagenumschlag nach innen erfolgt. Hierdurch ergibt sich bei Rollbälgen aus bestimmten Lagenkombinationen nach dem Vulkanisieren ein besonders sanfter und gleichmäßiger Übergang zwischen verstärkten Bereichen und den restlichen Bereichen des Rollbalgs.

Eine weitere vorteilhafte Weiterbildung besteht darin, dass der Lagenumschlag über die gesamte Länge des Rollbalges reicht. Dies kann dann geschehen, wenn der Balgrohling aus Fertigungs- oder Konstruktionsgründen besonders dünn ausgeführt werden soll. Ein solcher Rollbalg erhält durch die - ggf. mehrfachen - Stülpungen oder Faltungen erst seine eigentliche Konstruktionswanddicke sowie seine verstärkten Bereiche.

Anhand eines Ausführungsbeispieles soll die Erfindung näher erläutert werden. Es zeigen
- Fig. 1: eine erfindungsgemäße Luftfeder für ein Kraftfahrzeug
- Fig. 2: den Rollbalg der in Fig. 1 dargestellten Luftfeder in Form einer Prinzipskizze.

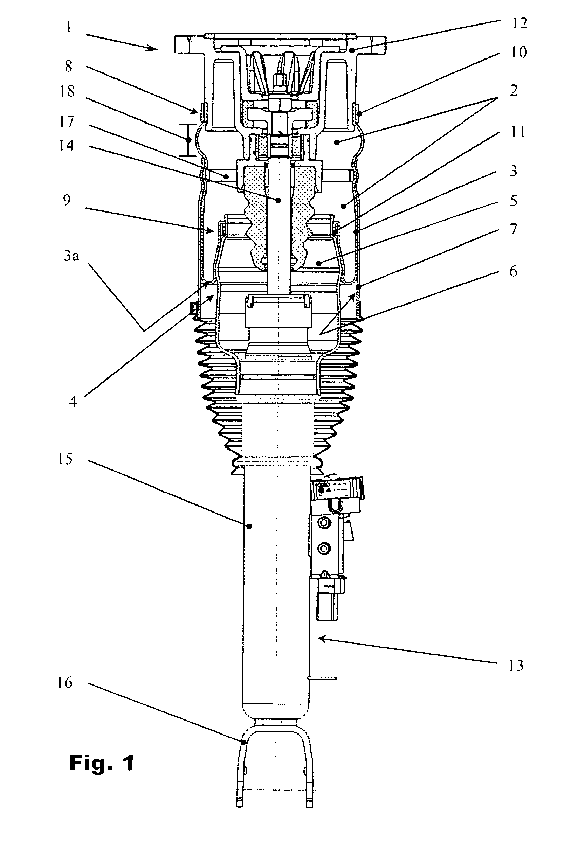

Die Fig. 1 zeigt eine Luftfeder 1 für ein Kraftfahrzeug, die einen mit Druckluft gefüllten Arbeitsraum 2 aufweist, der mindesten teilweise durch den Rollbalg 3 begrenzt wird, der eine Rollfalte 3a bildet. Der Rollbalg 3 rollt beim Ein- und Ausfedern des Fahrzeuges sowohl auf der rotationssymmetrischen Kontur 4 des Abrollkolbens 5 als auch auf der Innenoberfläche 6 der Außenführung 7 ab. An seinen Enden 8, 9 ist der Rollbalg mit Klemmringen 10, 11 an den Anschlussteilen befestigt, nämlich mit seinem oberen Ende am Luftfederdeckel 12 und mit seinem unteren Ende am Abrollkolben 5.

Die Luftfeder 1 weist einen zentrisch angeordneten Hydraulikdämpfer 13 auf, wobei dessen Kolbenstange 14 über und mit dem Luftfederdeckel 12 mit der hier nicht näher dargestellten Karosserie verbunden ist und der Dämpferzylinder 15 über den unteren Anschlussflansch 16 mit einem hier ebenfalls nicht näher dargestellten Radträger des Fahrwerks.

Bei Luftdämpfern, d.h. bei Systemen, bei denen sowohl die Federung als auch die Dämpfung pneumatisch erfolgt, wird übrigens der Hydraulikdämpfer durch einen zweiten Arbeitsraum, den Dämpfungsraum, ersetzt, der mit dem Arbeitsraum 2 über Strömungsventile verbunden ist.

Die Außenführung 7 ist mit einem Abstand zum Luftfederdeckel 12 direkt am Rollbalg 3 befestigt. Dies geschieht durch den Klemmring 17 auf der Innenseite des Rollbalges 3, der die den Rollbalg umgebende Außenführung 7 an ihrem oberen Ende festklemmt. Der Abstand zwischen Luftfederdeckel 12 und oberem Rand der Außenführung 7, d.h. das nicht von der Außenführung umgebende deckelnahe Teilstück 18 des Rollbalges 3 bildet die "Kardanikfalte".

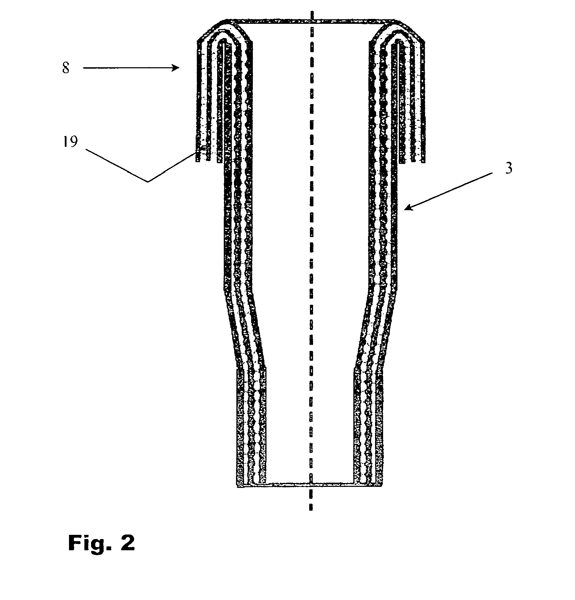

Fig. 2 zeigt den Rollbalg 3 aus der Fig. 1 in Form einer Prinzipskizze. Dabei der weist der Rollbalg an seinem dem Luftfederdeckel 12 nahe liegenden Ende 8 einen verstärkten Teil auf, nämlich einen nach außen geschlagenen und vulkanisierten Lagenumschlag 19. Der Lagenumschlag 19 ist in einer solchen Länge zurückgestülpt, dass nach Zusammenbau der Luftfeder der Lagenumschlag 19 bis in den Befestigungsbereich der Außenführung 7, d.h. bis unter den Klemmring 17 reicht.

### Bezugszeichenliste

### (Teil der Beschreibung)

- 1: Luftfeder
- 2: Arbeitsraum
- 3: Rollbalg
- 3a: Rollfalte
- 4: Rotationssymmetrische Kontur
- 5: Abrollkolben
- 6: Innenoberfläche der Außenführung
- 7: Außenführung
- 8: Oberes Rollbalgende
- 9: Unteres Rollbalgende
- 10: Klemmring am Luftfederdeckel
- 11: Klemmring am Abrollkolben
- 12: Luftfederdeckel
- 13: Hydraulikdämpfer
- 14: Kolbenstange
- 15: Dämpferzylinder
- 16: Anschlussflansch
- 17: Klemmring für Außenführung
- 18: Kardanikfalte
- 19: Lagenumschlag

## Patentansprüche

1. Luftfeder oder Luftdämpfer für Fahrwerke von Fahrzeugen, wobei die Luftfeder (1) mindestens einen mit Druckluft gefüllten Arbeitsraum (2) aufweist, der mindestens teilweise durch einen Rollbalg (3) begrenzt wird, wobei der Rollbalg mindestens teilweise auf Abrollkonturen (4) abrollt, mit einem oberen Ende (8) an einem Luftfederdeckel (12) und mit einem unteren Ende (9) an einem Abrollkolben (5) reib-und/oder formschlüssig befestigt und an mindestens dem oberen Ende (8) partiell mit einer im Verhältnis zum restlichen Rollbalgkörper dickeren Wand und/oder zusätzlichen Materiallagen verstärkt ist, und wobei die Luftfeder eine am Rollbalg (3) befestigte und zu dem Luftfederdeckel (12) beabstandete Außenführung (7) aufweist **dadurch gekennzeichnet, dass** der Rollbalg (3) an dem verstärkten oberen Ende (8) mindestens einen durchgehend vulkanisierten Lagenumschlag (19) aufweist, der an dem der Befestigung der Außenführung (7) nahe liegenden Ende (8) des Rollbalges (3) angeordnet und in einer solchen Länge zurückgestülpt ist, dass nach Zusammenbau der Luftfeder mindestens eine Kardanikfalte (18) des Rollbalges (3), welche eine durch senkrecht zur Achse des Rollbalges (3) wirkende Kräfte erzeugte Auslenkung des Rollbalges (3) ermöglicht, zwischen Luftfederdeckel (12) und Außenführung (7) in den Bereich des Lagenumschlages (19) fällt.

2. Luftfeder oder Luftdämpfer nach Anspruch 1, **dadurch gekennzeichnet, dass** der Lagenumschlag (19) bis in den Befestigungsbereich der Außenführung (7) reicht.

3. Luftfeder oder Luftdämpfer nach Anspruch 1 oder 2, **dadurch gekennzeichnet, dass** der Lagenumschlag (19) nach innen erfolgt.

4. Luftfeder oder Luftdämpfer nach Anspruch 1 oder 2, **dadurch gekennzeichnet, dass** der Lagenumschlag (19) über die gesamte Länge des Rollbalges (3) reicht.

## Claims

1. Air spring or air damper for the chassis of vehicles, the air spring (1) comprising at least one working chamber (2) filled with compressed air which is at least partially delimited by a rolling bellows (3), the rolling bellows rolling at least partially on rolling contours (4), being fastened by a frictional and/or positive connection with an upper end (8) to an air spring cover (12) and with a lower end (9) to a roll-off piston (5) and being partially reinforced at at least the upper end (8) by a wall which is thicker in relation to the remainder of the rolling bellows body and/or by additional material layers, and the air spring having an external guide (7) which is fastened to the rolling bellows (3) and spaced apart from the air spring cover (12), **characterized in that** the rolling bellows (3) has on the reinforced upper end (8) at least one continuously vulcanized folded-up layer (19), which is arranged at the end (8) of the rolling bellows (3) located in the vicinity of the fastening of the external guide (7) and is folded back to such a length that, after the assembly of the air spring, at least one cardanic fold (18) of the rolling bellows (3), which cardanic fold (18) makes a deflection of the rolling bellows (3) possible which is produced by forces which act perpendicularly with respect to the axis of the rolling bellows (3), falls into the region of the folded-up layer (19) between the air spring cover (12) and the external guide (7).

2. Air spring or air damper according to Claim 1, **characterized in that** the folded-up layer (19) extends as far as the fastening region of the external guide (7).

3. Air spring or air damper according to Claim 1 or 2, **characterized in that** the folded-up layer (19) is formed inwardly.

4. Air spring or air damper according to Claim 1 or 2, **characterized in that** the folded-up layer (19) extends over the entire length of the rolling bellows (3).

## Revendications

1. Ressort à air ou amortisseur à air pour châssis de véhicules, le ressort à air (1) présentant au moins un espace de travail (2) rempli d'air sous pression, qui est limité au moins en partie par un soufflet roulant (3), le soufflet roulant roulant au moins en partie sur des contours de roulement (4), étant fixé par une extrémité supérieure (8) à un chapeau de ressort à air (12) et par une extrémité inférieure (9) à un piston déroulant (5), par engagement par friction et/ou par coopération de forme, et étant renforcé au moins à l'extrémité supérieure (8) en partie par une paroi plus épaisse par rapport au reste du corps de soufflet roulant et/ou par des couches de matériau supplémentaires, et le ressort à air présentant un guidage extérieur (7) fixé au soufflet roulant (3) et espacé par rapport au chapeau de ressort à air (12), **caractérisé en ce que** le soufflet roulant (3) présente, au niveau de l'extrémité supérieure renforcée (8), au moins un retournement des couches (19) vulcanisé continu, qui est disposé à l'extrémité (8) du soufflet roulant (3) proche de la fixation du guidage extérieur (7) et qui est replié sur une longueur telle qu'après l'assemblage du ressort à air, au moins un pli cardanique (18) du soufflet roulant (3), qui permet une déviation du soufflet roulant (3) produite par des forces agissant perpendiculairement à l'axe du soufflet roulant (3), se place entre le chapeau de ressort à air (12) et le guidage extérieur (7) dans la région du retournement des couches (19).

2. Ressort à air ou amortisseur à air selon la revendication 1, **caractérisé en ce que** le retournement des couches (19) s'étend jusque dans la région de fixation du guidage extérieur (7).

3. Ressort à air ou amortisseur à air selon la revendication 1 ou 2, **caractérisé en ce que** le retournement des couches (19) est réalisé vers l'intérieur.

4. Ressort à air ou amortisseur à air selon la revendication 1 ou 2, **caractérisé en ce que** le retournement des couches (19) s'étend sur toute la longueur du soufflet roulant (3).
